# EUROPEAN PATENT SPECIFICATION

(11) **EP 3 240 188 B1**
(45) Date of publication and mention of the grant of the patent: **12.07.2023**
(21) Application number: 15873283.4
(22) Date of filing: 25.12.2015
(51) Int. Cl.: H02S 30/10, E04D 13/18, H02S 20/23

(54) **SOLAR CELL MODULE AND SOLAR CELL ARRAY USING SAME**
SOLARZELLENMODUL UND SOLARZELLENARRAY DAMIT
MODULE DE CELLULES SOLAIRES ET RÉSEAU DE CELLULES SOLAIRES L'UTILISANT

(30) Priority: 26.12.2014 JP 2014263783
(43) Date of publication of application: 01.11.2017
(73) Proprietor: Kyocera Corporation, Kyoto-shi, Kyoto 612-8501 (JP)
(72) Inventor: NISHIO, Yuta, Kyoto-shi, Kyoto 612-8501 (JP)
(74) Representative: Viering, Jentschura & Partner mbB Patent- und Rechtsanwälte
(86) International application number: PCT/JP2015/086258
(87) International publication number: WO 2016/104715

(56) References cited:
- EP-A1- 2 431 553
- EP-A2- 1 775 777
- WO-A1-2011/093171
- CN-U- 203 938 036
- CN-U- 203 941 891
- JP-A- 2007 120 054
- JP-A- 2009 057 757
- JP-A- 2009 141 216
- JP-A- 2015 090 967
- US-A1- 2010 219 304

## Description

### Technical Field

The present invention relates to solar cell modules and solar cell arrays using the same.

### Background Art

Solar cell modules need to be capable of maintaining the power generation efficiency.

One of the causes of low power generation efficiency of a solar cell module is soiling of a light receiving surface. For example, due to evaporation of rainwater on the light receiving surface of the solar cell module, sand and dust in the rainwater adhere to the glass and the like of the light receiving surface and block light accordingly, thereby reducing the power generation efficiency. To cope with this, a solar cell module with improved antifouling property is proposed in Japanese Patent Application Laid-Open No. 2013-157477. As mentioned above, there is a demand for a solar cell module that includes the light receiving surface with improved resistance to being soiled with, for example, sand and dust and maintains the power generation efficiency accordingly.

EP 2 431 553 A1 discloses a securing configuration of a solar cell module including a plurality of supporting members which are mounted on roof members. Moreover, CN 203 938 036 U and CN 203 941 891 U disclose photovoltaic layer casting die transport protection chucks.

### Summary

The invention provides an inclined roof (2) according to claim 1.

Preferred embodiments are disclosed in the dependent claims.

In the solar cell module and the solar cell array having the configurations as described in conjunction with the inclined roof (2) according to the present invention, at least one side of the solar cell panel is exposed from the protecting member. In the state in which the protecting member is fixed to a frame, rainwater and the like on the first surface can be drained from the exposed side, which is exposed from the protecting member. This can reduce the amount of sand and dust adhering to the first surface, which is the light-receiving surface of the solar cell module. Reduction in the power generation efficiency can be reduced accordingly.

### Brief Description of Drawings

[FIG. 1] FIG. 1 illustrates a solar cell array according to one embodiment of the present invention, FIG. 1(a) is a perspective view, FIG. 1(b) is a cross-sectional view of FIG. 1(a) when seen from Section A-A', and FIG. 1(c) is an exploded perspective view of Part B of FIG. 1(a).
[FIG. 2] FIG. 2 illustrates a solar cell module for use in the solar cell array according to one embodiment of the present invention, FIG. 2(a) is a plan view when seen from a first surface side, FIG. 2(b) is a cross-sectional view of FIG. 2 (a) when seen from Section C-C', and FIG. 2(c) is an enlarged perspective view of Part D of FIG. 2(a).
[FIG. 3] FIG. 3 illustrates a part of the solar cell array according to one embodiment of the present invention, FIG. 3(a) is a cross-sectional view of Part E, which is enlarged, of FIG. 1(b), and FIG. 3 (b) is a cross-sectional view of FIG. 1(a) and illustrates Section F-F'.
[FIG. 4] FIG. 4 illustrates a solar cell module for use in a solar cell array according to another embodiment of the present invention and is a plan view corresponding to FIG. 2(a).
[FIG. 5] FIG. 5 illustrates the solar cell array according to another embodiment of the present invention and is a perspective view of the part corresponding to FIG. 1(c).
[FIG. 6] FIG. 6 illustrates the solar cell array according to another embodiment of the present invention, FIG. 6(a) is a perspective view of the part corresponding to FIG. 1(c), and FIG. 6(b) is a cross-sectional view of the part corresponding to FIG. 3(a).
[FIG. 7] FIG. 7 illustrates the solar cell array according to another embodiment of the present invention and is an enlarged perspective view of the part corresponding to FIG. 1(c).
[FIG. 8] FIGs. 8(a) and 8(b) each illustrate the solar cell array according to still another embodiment of the present invention and is an enlarged perspective view of the part corresponding to FIG. 1(c).

### Description of Embodiments

A solar cell module and a solar cell array according to one embodiment of the present invention will now be described in detail with reference to the drawings. Note that the drawings are schematic illustrations.

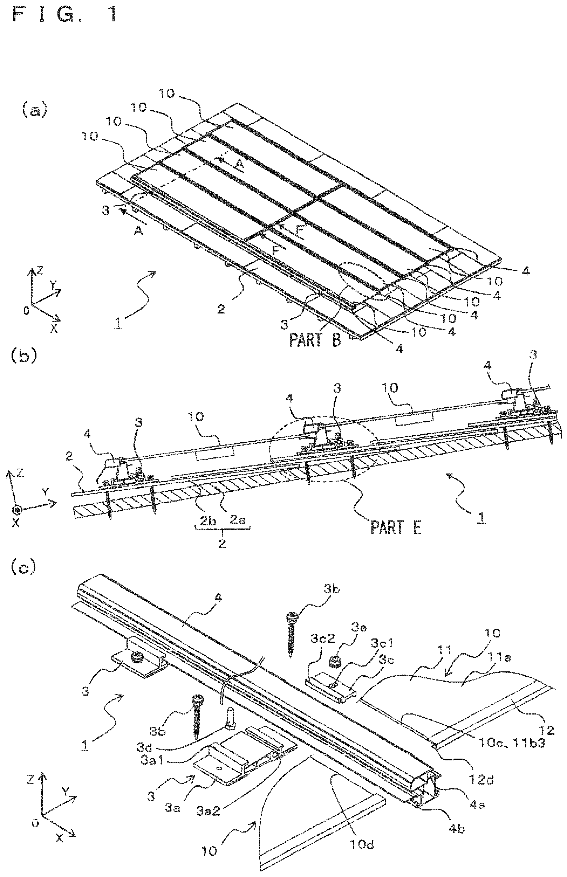

As illustrated in FIG. 1, a solar cell array 1 is fixed to, for example, a roof (installation surface) 2. The roof 2 includes, for example, a sheathing roof board 2a and a roofing material 2b fixed on the sheathing roof board 2a. The solar cell array 1 includes fixing members 3, holding members 4, solar cell modules 10 having rectangular shapes.

In the following description, the direction along one side of the individual solar cell module 10 in FIG. 1 and parallel to the horizontal plane is referred to as the X direction, the direction parallel to the main surface of the individual solar cell module 10 and orthogonal to the one side is referred to as the Y direction, and the direction orthogonal to the X and Y directions is referred to as the Z direction. In the following description, the position located on a perpendicular direction (a gravity direction) side may be expressed as being below and the position located on an opposite direction side to the gravity direction side may be expressed as being above. In the state in which the individual solar cell module is installed on the inclined roof 2, the upward direction is referred to as the +Y direction and the downward direction is referred to as the -Y direction. As to the Z direction, the upward direction is referred to as the +Z direction and the downward direction is referred to as the -Z direction. The upper portion of the inclination may be referred to as a ridge and the lower portion of the inclination may be referred to as eaves.

### «Solar Cell Modules»

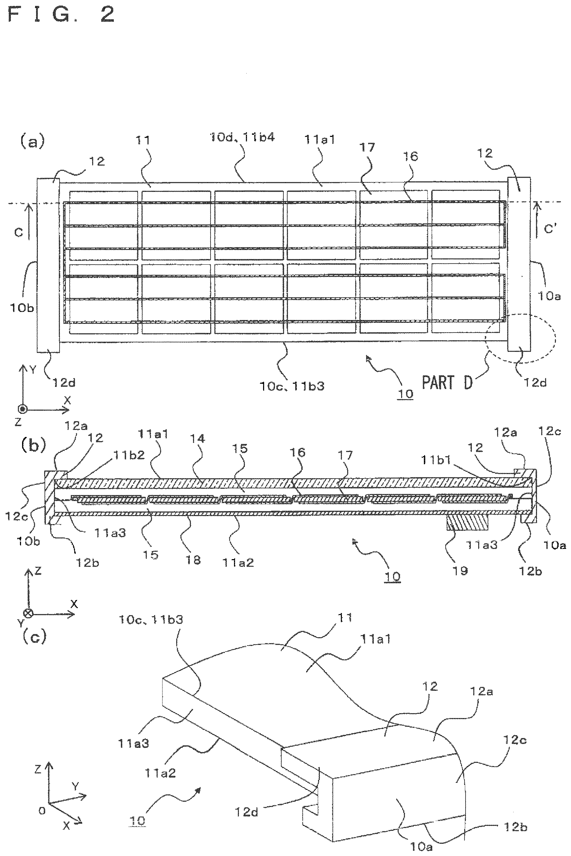

Firstly, the solar cell modules 10 according to one embodiment of the present invention will be described with reference to FIGs. 1 and 2. As illustrated in FIG. 1, a plurality of solar cell modules 10 are arranged along the X and Y directions. As illustrated in FIG. 2, the individual solar cell module 10 includes a solar cell panel 11 having a rectangular shape and a protecting member (a first protecting member 12) that protects a pair of opposed sides of the solar cell panel 11.

The solar cell panel 11 includes a first surface 11a1 (a main surface thereof above a light-transmissive substrate 14) that mainly receives light, a second surface 11a2 (a main surface thereof below a rear-surface protecting member 18) on the backside of the first surface 11a1, and a third surface 11a3 (regarded as a side surface of the solar cell panel 2) connecting between the first surface 11a1 and the second surface 11a2. When seen from the first surface 11a1 side, the solar cell panel 11 has a first side 11b1, a second side 11b2, a third side 11b3, and a fourth side 11b4. In the state in which the individual solar cell module 10 is installed so as to be inclined relative to the horizontal direction as illustrated in FIG. 1, the first side 11b1 and the second side 11b2 are located along the direction (the Y direction) in which the individual solar cell module 10 is inclined. Thus, the first side 11b1 and the second side 11b2 may be regarded as a pair of opposed sides in the individual solar cell module 10. The third side 11b3 is located so as to connect between an end portion of the first side 11b1 and an end portion of the second side 11b2 on the eaves side. In contrast, the fourth side 11b4 is located so as to connect between an end portion of the first side 11b1 and an end portion of the second side 11b2 on the ridge side. The third side 11b3 and the fourth side 11b4 are located along the X direction. In the present embodiment, each of the third side 11b3 and the fourth side 11b4 is longer than each of the first side 11b1 and the second side 11b2.

The protecting member is attached to the end portions of the solar cell panel 11 to protect the periphery of the solar cell panel 11. In the present embodiment, the first protecting member 12 being a part of the protecting member covers and protects the first side 11b1 and the second side 11b2, namely, one pair of opposed sides of the solar cell panel 11. Specifically, the first protecting member 12 sandwiches the one pair of opposed sides of the solar cell panel 11 from both the first surface 11a1 side and the second surface 11a2 side, thereby protecting the first side 11b1 and the second side 11b2.

Meanwhile, the third side 11b3 and the fourth side 11b4 of the solar cell panel 11 are exposed from the first protecting member 12. In the present embodiment, the third side 11b3 and the fourth side 11b4 are regarded as exposed sides. That is, the portion of the solar cell panel 11 on the exposed sides are not protected by the first protecting member 12, and thus, the light-transmissive substrate 14, the rear-surface protecting material 18, and the like, which will be described below, are left uncovered. In the following description, the portion of the solar cell module 10 on the first side 11b1 side is referred to as a first end portion 10a, the portion of the solar cell module 10 on the second side 11b2 side is referred to as a second end portion 10b, the portion of the solar cell module 10 on the third side 11b3 side is referred to as a third end portion 10c, and the portion of the solar cell module 10 on the fourth side 11b4 side is referred to as a fourth end portion 10d.

The solar cell panel 11 includes, in the stated order from the first surface 11a1 side thereof, the light-transmissive substrate 14, which doubles as the substrate of the individual solar cell module 10, and a pair of sealers 15 made of thermosetting resin. The solar cell panel 11 also includes an inner lead 16 surrounded and protected by the sealer 15 and a plurality of solar cell elements 17 electrically connected with each other via the inner lead 16. In addition, the solar cell panel 11 includes the rear-surface protecting member 18 protecting the rear surface of the individual solar cell module 10 and a terminal box 19 for emitting the output obtained by the solar cell elements 17 to the outside.

The light-transmissive substrate 14 has a rectangular shape and has the function of protecting the sealer 15, the inner lead 16, and the solar cell elements 17. The light-transmissive substrate 14 may be made of, for example, tempered glass, white sheet glass, or the like.

The inner lead 16 has the function of establishing electric connection between the solar cell elements 17 adjacent to each other. Examples of the inner lead 16 include copper foil covered with solder for connection to the solar cell elements 17.

The sealer 15 has the function of sealing the solar cell elements 17, the inner lead 16, and the like. Examples of the sealer 15 include thermosetting resin such as transparent ethylene vinyl acetate (EVA) copolymer.

The rear-surface protecting material 18, which has a rectangular shape and is the same size as the light-transmissive substrate 14, has the function of protecting the sealer 15, the inner lead 16, and the solar cell elements 17 from the second surface 11a2 side. The rear-surface protecting material 18 may be made of, for example, polyethylene terephthalate (PET) resin or polyethylene naphthalate (PEN) resin.

The rear-surface protecting member 18 and the sealer 15 that is located between the solar cell elements 17 and the rear-surface protecting member 18 may be made of any light-transmissive material, and may be configured to receive a part of light incident from the second main surface 11a2 side.

The individual solar cell element 17 is, for example, a flat-shaped substrate made of, for example, monocrystalline silicon, polycrystalline silicon, or the like. In this case, the inner lead 16 may be used to establish electric connection between the silicon substrates adjacent to each other, as mentioned above.

The solar cell elements 17 are not limited to a particular kind. For example, the individual solar cell element 17 may be a thin-film solar cell made of amorphous silicon, a copper indium gallium selenide (CIGS) solar cell, a cadmium telluride (CdTe) solar cell, or a solar cell including a crystalline silicon substrate and thin-film amorphous silicon formed on the substrate. For example, the solar cell elements 17 made of amorphous silicon, GIGS, and CdTe may include a structure in which transparent electrodes and the like and amorphous silicon layer, GIGS layer, or CdTe layer are combined and laminated on the light-transmissive substrate 14 appropriately.

The terminal box 19 includes a housing made of modified polyphenylene ether (modified PPE) resin or polyphenylene oxide (PPO) resin, a terminal plate disposed in the housing, and an output cable for emitting electric power to the outside of the housing.

The first protecting member 12 is disposed along the first side 11b1 and the second side 1 1b2, bonded to the sides via, for example, a silicone adhesive, and has the function of protecting the first side 11b1 and the second side 11b2. The first protecting member 12 has a C-shape section including an upper portion 12a located on the first surface 11a1 side, a lower portion 12b located on the second surface 11a2 side, and a side portion 12c connecting between the upper portion 12a and the lower portion 12b. The first protecting member 12 protects the entirety of the first side 11b1 and the second side 1 1b2. The first protecting member 12 is formed so as to be longer than each of the first side 11b1 and the second side 11b2 in the Y direction. The first protecting member 12 thus includes a protruding portion (a first portion 12d) that protrudes from the third side 11b3, which is exposed from the first protecting member 12, toward the outside along the -Y direction. The first protecting member 12 can be produced by, for example, aluminum extrusion molding.

### «Solar Cell Array»

### <First Embodiment>

The solar cell array 1 according to one embodiment of the present invention will now be described. As illustrated in FIG. 1, the solar cell array 1 includes the fixing members 3, which are spaced and fixed on the roof 2 along the X direction, and the holding members 4 disposed on the fixing members 3. In the solar cell array 1, each of the plurality of solar cell modules 10 is held between the plurality of holding members 4 disposed along the Y direction at regular spacings.

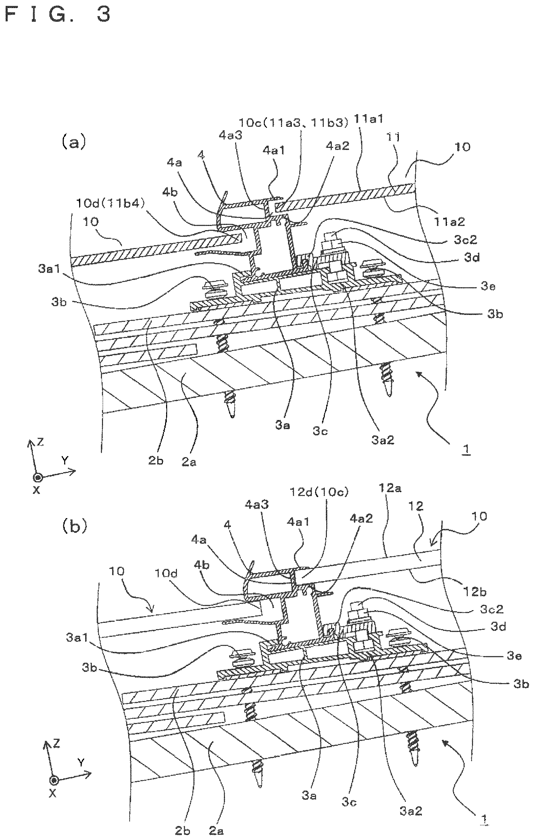

As illustrated in FIGs. 1 and 3, the individual fixing member 3 includes a base 3a, wood screws 3b, a fastening plate 3c, a bolt 3d, and a nut 3e. The base 3a is a tabular member that is fastened on the roof 2 with the wood screws 3b and extends in the Y direction while holding the holding member 4 from the lower side. The base 3a includes an engaging portion 3a1 located on the -Y direction side and having a hook shape. On the +Y direction side, the base 3a has an opening 3a2 into which the top part of the bolt 3d is inserted. The opening 3a2 is formed so as to extend in the X direction such that the bolt 3d is movable along the X direction. The fastening plate 3c is a member for fastening the holding member 4 mounted on the base 3a. The fastening plate 3c has a through-hole 3c1 through which the bolt 3d is inserted, and a retaining portion 3c2 sandwiching the holding member 4 and having a hook shape. The fastening plate 3c is fastened to the base 3a with both the bolt 3d fitted in the opening 3a2 and the nut 3e tightened on the fastening plate 3c. The base 3a and the fastening plate 3c can be produced by, for example, aluminum extrusion molding.

As illustrated in FIG. 1, the individual holding member 4 is a rod-shaped member holding the solar cell modules 10. The plurality of holding members 4, whose longitudinal sides extend along the X direction, are fixed so as to be arranged in parallel with each other in the Y direction. The holding members 4 are mounted on the plurality of fixing members 3 to be fixed thereto. The plurality of solar cell modules 10, whose lengths in total are in agreement with the length of the individual holding member 4 in the X direction, are fitted between a pair of holding members 4 opposed to each other in the Y direction. Thus, the plurality of solar cell modules 10 are arranged side by side along both the X direction and the Y direction.

As illustrated in FIG. 1(c), the individual holding member 4 includes a first holding portion 4a open to the +Y direction and a second holding portion 4b open to the - Y direction. As illustrated in FIG. 1(c), the third end portion 10c of the solar cell module 10 located on the ridge side relative to the holding member 4 is inserted into the first holding portion 4a. The fourth end portion 10d of the solar cell module 10 located on the eaves side relative to the holding member 4 is inserted into the second holding portion 4b.

As illustrated in FIG. 3, when seen from the X direction, the first holding portion 4a includes a first wall portion 4a1 located on the +Z direction side and a second wall portion 4a2 located on the -Z direction side. The first holding portion 4a also includes a third wall portion 4a3 located on the -Y direction side and connecting between the first wall portion 4a1 and the second wall portion 4a2. The first holding portion 4a is disposed so as to extend along the longitudinal direction of the third side 11b3. In the following description, the inner surface of the first holding portion 4a refers to surfaces of the first wall portion 4a1, the second wall portion 4a2, and the third wall portion 4a3 that face the solar cell panel 11.

In the solar cell array 1, the third end portion 10c is inserted into the first holding portion 4a and held thereby. Specifically, the first portion 12d of the first protecting member 12 located on the third side 11b3 side (the third end portion 10c side) exposed from the first protecting member 12 is supported by the first holding portion 4a, so that the solar cell module 10 is held by the holding member 4. In other words, on the third end portion 10c side, the solar cell module 10 is loosely fitted in the first holding portion 4a. In this state, the first wall portion 4a1 and the upper portion 12a face each other. In addition, the second wall portion 4a2 and the lower portion 12b face each other. Furthermore, the third wall portion 4a3 and the tip of the first portion 12d on the -Y direction side face each other. Although at least the first portion 12d needs to be inserted into the first holding portion 4a and held thereby, portions other than the first portion 12d of the first protecting member 12 may be fitted in the first holding portion 4a as well.

The solar cell array 1 also includes a coupling portion 4a that extends along the exposed side (the third side 11b3) and couples a pair of first holding portions 4a. The coupling portion 4a is kept from contact with the solar cell panel 11.

In the following description, the reference sign 4a in FIG. 3(a) indicates the coupling portion, whereas the reference sign 4a in FIG. 3(b) indicates the first holding portion. This means that the coupling portion 4a is a part of the holding member 4 corresponding to the exposed side.

The first surface 11a1, the second surface 11a2, and the third surface 11a3 that are located on the third side 11b3 side are apart from the inner surface of the coupling portion 4a. This means that a predetermined clearance is provided between the inner surface of the coupling portion 4a and the solar cell panel 11. The clearance between the first wall portion 4a1 and the first surface 11a1 is required to be greater than the thickness of the upper portion 12a, and the clearance between the second wall portion 4a2 and the second surface 11a2 is required to be equal to the thickness of the lower portion 12b. The clearance between the third wall portion 4a3 and the third surface 11a3 is required to be equal to the length of the first portion 12d protruding from the third side 11b3. As illustrated in FIG. 3, the exposed side is fitted in the coupling portion 4a in the present embodiment. However, it is not always required that the exposed side be fitted in the coupling portion 4a. This embodiment improves the function of draining water from the third side 11b3 side.

The length of the first portion 12d protruding from the third side 11b3 is advisably set to be greater than the thickness of each of the upper portion 12a and the lower portion 12b and shorter than or equal to the length of the part of the solar cell panel 11 accommodated in the first holding portion 4a. This configuration provides, almost without fail, a flow path that does not constrict between the individual holding member 4 and each of the first surface 1 1a1, the second surface 11a2, and third surface 11a3. Thus, rainwater and the like on the first surface 11a1 can be drained smoothly. In addition, when the individual solar cell module 10 is bent due to a wind load or a snow load, the third side 11b3 contacts the first wall portion 4a1 or the second wall portion 4a2 and can be held by the first wall portion 4a1 or the second wall portion 4a2.

Each of the upper portion 12a and the lower portion 12b is required have a thickness of, for example, 1mm or more such that the space between the first wall portion 10a and the first surface 11a1 and the space between the second wall portion 4a2 and the second surface 11a2 are less likely to be clogged with sand and dust. Note that each of the upper portion 12a and the lower portion 12b advisably has a thickness of 3mm or less so as not to cast a large shadow over the first surface 11a1 of the solar cell panel 11.

In the individual solar cell module 10 according to the present embodiment, the third side 11b3 and the fourth side 11b4, except for the end portions thereof, are exposed from the first protecting member 12. In the case where the solar cell array 1 is obtained by inserting the first portion 12d into the first holding portion 4a, a clearance is formed such that the first surface 11a1, the second surface 11a2, and the third surface 11a3 that are located on the third side 11b3 side are kept from contact with the inner surface of the coupling portion 4a. Thus, the individual solar cell module 10 can drain rainwater and the like on the first surface 11a1 through the above-mentioned clearance to the outside. The light-receiving surface (the first surface 11a1) of the individual solar cell module 10 becomes more resistant to soiling, and reduction in the power generation efficiency can be reduced accordingly.

The above-mentioned clearance extends throughout almost the entirety of the third side 11b3, and thus, the individual solar cell module 10 can drain rainwater efficiently. Thus, sand, dust, and the like on the first surface 11 a1 can be washed out efficiently in an area with low precipitation, so that the build-up of the soiling can be reduced and the power generation efficiency can be maintained accordingly. The upper portion 12a, the lower portion 12b, and the first portion 12d are usually designed, for engagement with the first holding portion 4a, to allow a slight clearance from the inner surface of the first holding portion 4a. The above-mentioned exposed side is disposed as the lower side of the solar cell panel 11 in the perpendicular direction, so that the rainwater flows downstream toward the above-mentioned clearance to be drained smoothly.

In the individual solar cell module 10, the first protecting member 12 protrudes from the third side 11b3 to protect the corner portions of the solar cell panel 11. Thus, the light-transmissive substrate 14 and the like would be less susceptible to damage if the corner portions of the solar cell panel 11 bump into surrounding objects during, for example, the installation of the solar cell module 10.

The individual solar cell module 10 may have a rectangular shape, with the third side 11b3 and the fourth side 11b4 of the solar cell panel 11 being longer than the first side 11b1 and the second side 11b2 thereof. This configuration reduces the distance from the fourth side 11b4 to the third side 11b3 of the solar cell panel 11 in the solar cell array 1, and accordingly reduces the distance over which the rainwater flows on the first surface 11a1 of the solar cell panel 11 in the -Y direction. The amount of sand and dust adhering to the solar cell array 1 due to partial reduction in the amount of flow of rainwater can be reduced accordingly.

The length of the first portion 12d is required to be shorter than or equal to the length of the third side 11b3 inserted into the first holding portion 4a and accommodated therein. When the individual solar cell module 10 is bent due to a wind load or a snow load, the third side 11b3 comes into contact with the inner surface of the first holding portion 4a and held thereby. Thus, the solar cell panel 11 is less likely to be damaged by the excessive bent.

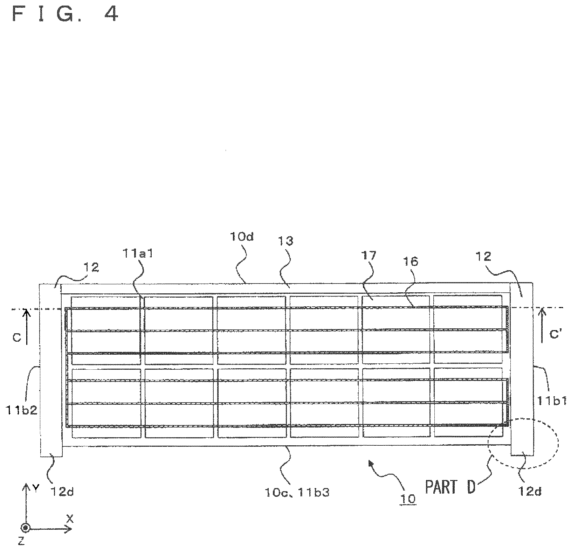

The configuration of the individual solar cell module 10 is not limited to the above. As illustrated in FIG. 4, the protecting member may include a second protecting member 13 for holding the fourth side 11b4. In the case where the individual solar cell module 10 includes the second protecting member 13 for protecting the fourth side 11b4, the solar cell module 10 has improved resistance to bending along the X direction. Thus, the solar cell module 10 is less likely to be vibrated by wind and the like, and can achieve noise reduction accordingly.

### <Second Embodiment>

The difference between the first embodiment and a second embodiment is that the individual holding member 4 in the solar cell array 1 according to the second embodiment includes cutout portions 4c.

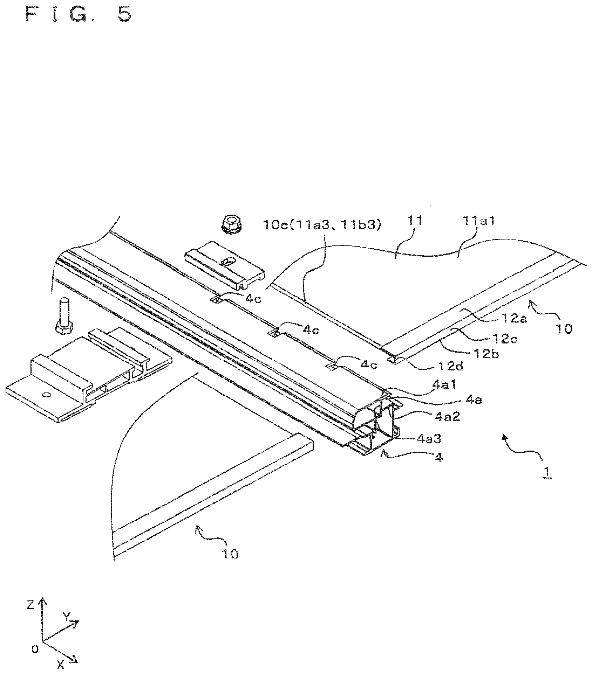

In the present embodiment, as illustrated in FIG. 5, a part of the first wall portion 4a1 includes the cutout portions 4c that extend to the third wall portion 4a3 while exposing a part of the first surface 11a1 on the third side 11b3 side. Thus, a large amount of rainwater flowing over the first surface 11a1 can be efficiently drained, when coming close to the first wall portion 4a1, through the cutout portions 4c to the outside. This can reduce the amount of sand and dust adhering to the solar cell panel 11.

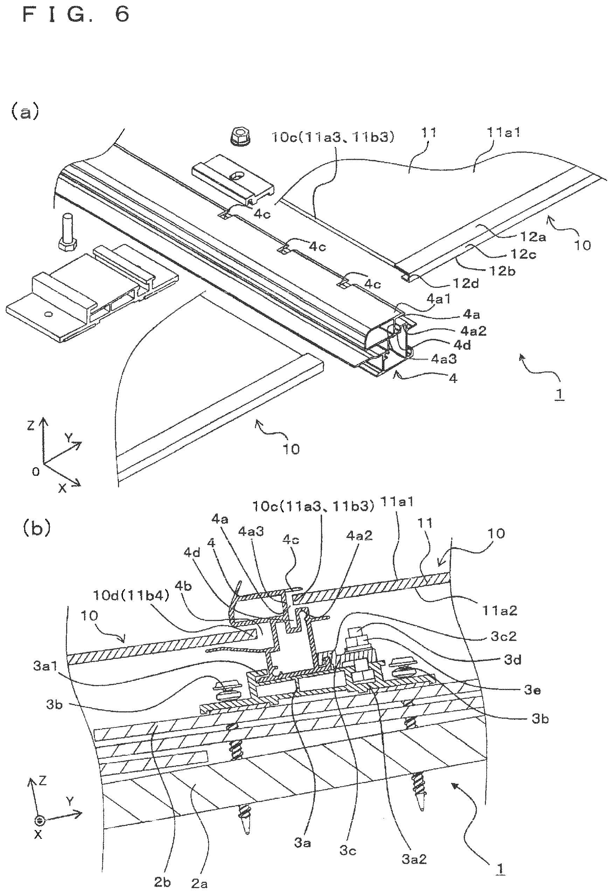

As illustrated in FIG. 6, in the solar cell array 1, the second wall portion 4a2 facing the second surface 11a2 may include a groove portion 4d extending along the longitudinal direction of the individual holding member 4. The groove portion 4d is advisably disposed close to the third wall portion 4a3. The water flowing into the groove portion 4d is drained from the end portions of the individual holding member 4. Thus, a large amount of rainwater flowing over the first surface 11a1 can be efficiently drained through the groove portion 4d to the outside. This can reduce the amount of sand and dust adhering to the solar cell panel 11.

In the present embodiment, the cutout portions 4c of the protecting member 4 extend to the upper side of the groove portion 4d, and thus, the rainwater can also flow into the groove portion 4d through the cutout portions 4c. The present embodiment provides a structure with improved drainage, to thereby efficiently wash out sand and dust. In the present embodiment, the flow of rainwater is less likely to be blocked at and around the end portions of the first wall portion 4a1 on the +Y direction side, so that the flow path (clearance) is less likely to be clogged with sand and dust.

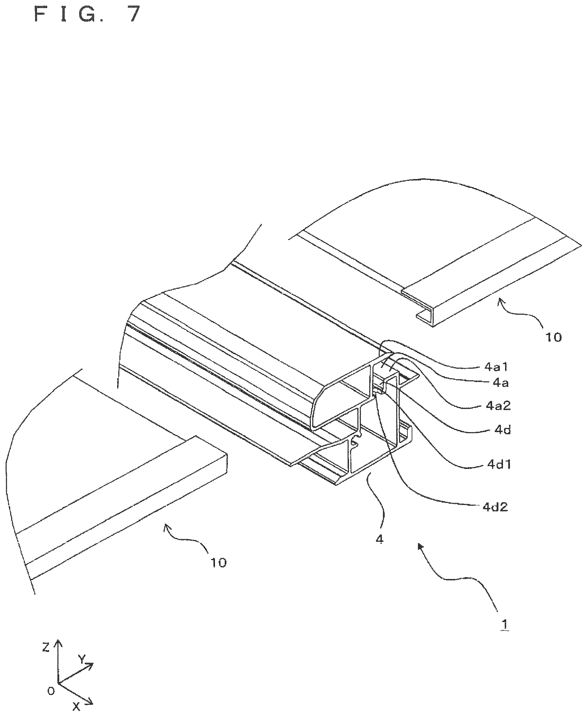

As illustrated in FIG. 7, the groove portion 4d may include hole portions 4d2 penetrating through a bottom surface 4d1 of the groove portion 4d. The rainwater flowing through the groove portion 4d can be drained through the hole portions 4d before reaching the end portions of the individual holding member 4. Thus, rainwater can be efficiently drained even in a heavy rain. The hole portions 4d2 are not limited to round holes and may be long holes or cutouts. The number and the size of the hole portions 4d2 need be set in a manner to avoid excessive reduction in the strength of the protecting member 4.

### <Third Embodiment>

The difference between the first embodiment and a third embodiment is that the solar cell array 1 according to the third embodiment includes conductive members 5 to establish electric connections between the individual holding member 4 and the first portion 12d.

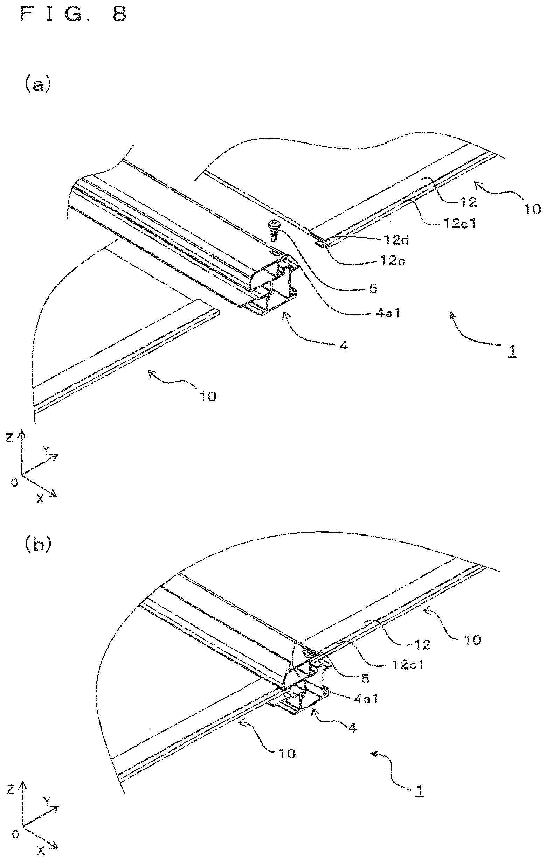

As illustrated in FIG. 8, the first protecting member 12 in the present embodiment includes a rib 12c projecting from the side portion 12c toward the outside in parallel with the first surface 11a1. The rib 12c is inserted into the first holding portion 4a of the individual holding member 4, and then, the first wall portion 4a1 and the first portion 12d of a rib 12c1, which is a portion protruding from the third side 11b3 to the outside, are fastened together and electrically connected to each other by the individual conductive member 5. The conductive member 5 may be a screw with a drill bit, namely, a screw having a drill-like tip. Thus, the holding members 4 and the solar cell modules 10 become electrically continuous with each other in a simple manner, so that the solar cell array 1 can be efficiently grounded.

As mentioned above, the embodiments of the present invention can provide solar cell modules each including the light receiving surface with improved resistance to being soiled with, for example, sand and dust such that reduction in the power generation efficiency can be reduced, and a solar cell array including the same.

### Explanation of Reference Signs

1: solar cell array
2: roof (installation surface)
   2a: sheathing roof board
   2b: roofing material
3: fixing member
   3a: base
      3a1: engaging portion
      3a2: opening
   3b: wood screw
   3c: fastening plate
      3c1: through-hole
      3c2: retaining portion
   3d: bolt
   3e: nut
4: holding member
   4a: first holding portion (coupling portion)
      4a1: first wall portion
      4a2: second wall portion
      4a3: third wall portion
   4b: second holding portion
   4c: cutout portion
   4d: groove portion
      4d1: bottom surface
      4d2: hole portion
5: conductive member
10: solar cell module
   10a: first end portion
   10b: second end portion
   10c: third end portion
   10d: fourth end portion
11: solar cell panel
   11a1: first surface
   11a2: second surface
   11a3: third surface
   11b1: first side
   11b2: second side
   11b3: third side
   11b4: fourth side
12: first protecting member
   12a: upper portion
   12b: lower portion
   12c: side portion
      12c1: rib
   12d: first portion
13: second protecting member
14: light-transmissive substrate
15: sealer
16: inner lead
17: solar cell element
18: rear-surface protecting member
19: terminal box

## Claims

1. An inclined roof (2) with a solar cell array (1) installed thereon,
the solar cell array (1) comprising:
a solar cell module (10) and
a holding member (4);
the inclined roof (2) including an upper portion of an inclination thereof as a ridge and a lower portion of the inclination as an eaves;
the solar cell module (10) including:
a solar cell panel (11) having a rectangular shape and having a first surface (11a1), a second surface (11a2) on a backside of the first surface (11a1), and a third surface (11a3) connecting between the first surface (11a1) and the second surface (11a2);
the solar cell panel (11) having a first side (11b1), a second side (11b2), a third side (11b3), and a fourth side (11b4), when seen from the first surface (11a1), the first side (11b1) and the second side (11b2) opposing each other, the third side (11b3) connecting between an end portion of the first side (11b1) and an end portion of the second side (11b2) on the eaves side, and the fourth side (11b4) connecting between an end portion of the first side (11b1) and an end portion of the second side (11b2) on the ridge side; and
a pair of first protecting members (12) each having a C-shape section including an upper portion (12a) located on the first surface (11a1),
a lower portion (12b) located on the second surface (11a2),
and a side portion (12c) connecting the upper portion (12a) and the lower portion (12b), the pair of first protecting members (12) covering and protecting the first side (11b1) and the second side (11b2) respectively, by sandwiching the first surface (11a1) and the second surface (11a2),
the third side (11b3) being exposed from the pair of first protecting members (12), wherein the pair of first protecting members (12) are formed so as to be longer than the first side (11b1) and the second side (11b2) respectively, including first portions (12d) that protrude from the third side (11b3),
wherein each of the third side (11b3) and the fourth side (11b4) is longer than each of the first side (11b1) and the second side (11b2),
wherein the holding member (4) holds the pair of first protecting members (12), and
wherein the holding member (4) includes one pair of holding portions (4a) that hold the first portions (12d) of the pair of first protecting members (12) at the end portions of the third side (11b3), and a coupling portion that extends along the third side (11b3) to couple the pair of holding portions (4a), the coupling portion being kept from contact with the solar cell panel.

2. The inclined roof (2) according to claim 1, wherein the solar cell module (10) further includes a second protecting member (13) that holds the fourth side (11b4).

3. The inclined roof (2) according to claim 1 or 2, wherein the coupling portion has, along the third side (11b3) of the solar cell panel (11), a first inner surface, a second inner surface, and a third inner surface that are opposed to the first surface (11a1), the second surface (11a2), and the third surface (11a3), respectively.

4. The inclined roof (2) according to any one of claim 1 to 3, wherein
the holding member (4) includes a first wall portion (4a1) opposed to the first surface (11a1), a second wall portion (4a2) opposed to the second surface (11a2), and a third wall portion (4a3) located between the first wall portion (4a1) and the second wall portion (4a2) and opposed to the third surface (11a3), and
a part of the first wall portion (4a1) includes a cutout portion (4c) from which a part of the first surface (11a1) located close to the third side (11b3) is exposed, the cutout portion (4c) extending to the third wall portion (4a3).

5. The inclined roof (2) according to any one of claims 1 to 4, wherein the holding member (4) includes a groove portion (4d) in an inner surface thereof opposed to the second surface (11a2) of the solar cell panel (11).

6. The inclined roof (2) according to claim 5, wherein the groove portion (4d) includes a hole portion (4d2) penetrating through a bottom surface of the groove portion (4d) .

7. The inclined roof (2) according to any one of claims 1 to 6, further comprising a conductive member (5) that is electrically connected to the holding member (4) and the first portions (12d).

## Patentansprüche

1. Schrägdach (2) mit einer darauf installierten Solarzellenanordnung (1),
wobei die Solarzellenanordnung (1) aufweist:
ein Solarzellenmodul (10) und
ein Halteelement (4),
wobei das Schrägdach (2) einen oberen Abschnitt einer Neigung davon als einen First und einen unteren Abschnitt der Neigung als eine Traufe aufweist,
wobei das Solarzellenmodul (10) aufweist:
ein Solarzellenpaneel (11), das eine rechteckige Form hat und eine erste Fläche (11a1), eine zweite Fläche (11a2) auf einer Rückseite der ersten Fläche (11a1) und eine dritte Fläche (11a3) hat, die zwischen der ersten Fläche (11a1) und der zweiten Fläche (11a2) verbindet,
wobei das Solarzellenpaneel (11) eine erste Seite (11b1), eine zweite Seite (11b2), eine dritte Seite (11b3) und eine vierte Seite (11b4) hat, wobei, von der ersten Fläche (11a1) aus betrachtet, die erste Seite (11b1) und die zweite Seite (11b2) einander gegenüberliegen, die dritte Seite (11b3) zwischen einem Endabschnitt der ersten Seite (11b1) und einem Endabschnitt der zweiten Seite (11b2) auf der Traufseite verbindet, und die vierte Seite (11b4) zwischen einem Endabschnitt der ersten Seite (11b1) und einem Endabschnitt der zweiten Seite (11b2) auf der Firstseite verbindet, und
ein Paar von ersten Schutzelementen (12), die jeweils einen C-förmigen Schnitt aufweisen, der einen oberen Abschnitt (12a), der sich auf ersten Fläche (11a1) befindet, einen unteren Abschnitt (12b), der sich auf zweiten Fläche (11a2) befindet, und einen Seitenabschnitt (12c), der den oberen Abschnitt (12a) und den unteren Abschnitt (12b) verbindet, aufweist,
wobei das Paar von ersten Schutzelementen (12) die erste Seite (11b1) bzw. die zweite Seite (11b2) abdeckt und schützt, durch sandwichartiges Aufnehmen der ersten Fläche (11a1) und der zweiten Fläche (11a2),
wobei die dritte Seite (11b3) von dem Paar von ersten Schutzelementen (12) freiliegt, wobei das Paar von ersten Schutzelementen (12) geformt ist, um länger als die erste Seite (11b1) bzw. die zweite Seite (11b2) zu sein, aufweisend erste Abschnitte (12d), die von der dritten Seite (11b3) hervorstehen,
wobei jede von der dritten Seite (11b3) und der vierten Seite (11b4) länger als jede von der ersten Seite (11b1) und der zweiten Seite (11b2) ist,
wobei das Halteelement (4) das Paar von ersten Schutzelementen (12) hält, und
wobei das Halteelement (4) ein Paar von Halteabschnitten (4a), die die ersten Abschnitte (12d) des Paares von ersten Schutzelementen (12) an den Endabschnitten der dritten Seite (11b3) halten, und einen Verbindungsabschnitt aufweist, der sich entlang der dritten Seite (11b3) erstreckt, um das Paar von Halteabschnitten (4a) zu verbinden, wobei der Verbindungsabschnitt außer Kontakt mit dem Solarzellenpaneel gehalten wird.

2. Schrägdach (2) gemäß Anspruch 1, wobei das Solarzellenmodul (10) ferner ein zweites Schutzelement (13) aufweist, das die vierte Seite (11b4) hält.

3. Schrägdach (2) gemäß Anspruch 1 oder 2, wobei der Verbindungsabschnitt entlang der dritten Seite (11b3) des Solarzellenpaneels (11) eine erste Innenfläche, eine zweite Innenfläche und eine dritte Innenfläche aufweist, die der ersten Fläche (11a1), der zweiten Fläche (11a2) bzw. der dritten Fläche (11a3) gegenüberliegen.

4. Schrägdach (2) gemäß irgendeinem der Ansprüche 1 bis 3, wobei
das Halteelement (4) einen ersten Wandabschnitt (4a1), der der ersten Fläche (11a1) gegenüberliegt, einen zweiten Wandabschnitt (4a2), der der zweiten Fläche (11a2) gegenüberliegt, und einen dritten Wandabschnitt (4a3) aufweist, der zwischen dem ersten Wandabschnitt (4a1) und dem zweiten Wandabschnitt (4a2) angeordnet ist und der dritten Fläche (11a3) gegenüberliegt, und
ein Teil des ersten Wandabschnitts (4a1) einen Ausschnittabschnitt (4c) aufweist, von dem ein Teil der ersten Fläche (11a1), nahe bei der dritten Seite (11b3) angeordnet, freigelegt ist, wobei sich der Ausschnittabschnitt (4c) zum dritten Wandabschnitt (4a3) erstreckt.

5. Schrägdach (2) gemäß irgendeinem der Ansprüche 1 bis 4, wobei das Halteelement (4) einen Nutabschnitt (4d) in einer Innenfläche davon gegenüber der zweiten Fläche (11a2) des Solarzellenpaneels (11) aufweist.

6. Schrägdach (2) gemäß Anspruch 5, wobei der Nutabschnitt (4d) einen Lochabschnitt (4d2) aufweist, der durch eine Bodenfläche des Nutabschnitts (4d) hindurchtritt.

7. Schrägdach (2) gemäß irgendeinem der Ansprüche 1 bis 6, ferner aufweisend ein leitfähiges Element (5), das mit dem Halteelement (4) und den ersten Abschnitten (12d) elektrisch verbunden ist.

## Revendications

1. Toit incliné (2) avec un réseau de cellules solaires (1) installé sur celui-ci ;
le réseau de cellules solaires (1) comprenant :
un module de cellules solaires (10) ; et
un élément de maintien (4) ;
le toit incliné (2) comprenant une partie supérieure de son inclinaison sous forme de faîtage et une partie inférieure de l'inclinaison sous forme d'avant-toit ;
le module de cellules solaires (10) comprenant :
un panneau de cellules solaires (11) ayant une forme rectangulaire et ayant une première surface (liai), une deuxième surface (11a2) sur une face arrière de la première surface (liai), et une troisième surface (11a3) se raccordant entre la première surface (liai) et la deuxième surface (11a2) ;
le panneau de cellules solaires (11) ayant un premier côté (11b1), un deuxième côté (11b2), un troisième côté (11b3) et un quatrième côté (11b4), lorsque vus de la première surface (liai), le premier côté (11b1) et le deuxième côté (11b2) s'opposant l'un à l'autre, le troisième côté (11b3) se raccordant entre une partie d'extrémité du premier côté (11b1) et une partie d'extrémité du deuxième côté (11b2) du côté d'avant-toit, et le quatrième côté (11b4) se raccordant entre une partie d'extrémité du premier côté (11b1) et une partie d'extrémité du deuxième côté (11b2) du côté de faîtage ; et
une paire de premiers éléments de protection (12) ayant chacun une section en forme de C comprenant une partie supérieure (12a) située sur la première surface (liai), une partie inférieure (12b) située sur la deuxième surface (11a2), et une partie latérale (12c) reliant la partie supérieure (12a) et la partie inférieure (12b),
la paire de premiers éléments de protection (12) recouvrant et protégeant respectivement le premier côté (11b1) et le deuxième côté (11b2) en prenant en sandwich la première surface (liai) et la deuxième surface (11b2),
le troisième côté (11b3) étant exposé de la paire de premiers éléments de protection (12), la paire de premiers éléments de protection (12) étant formés de manière à être plus longs que le premier côté (11b1) et le deuxième côté (11b2) respectivement, y compris des premières parties (12d) qui font saillie du troisième côté (11b3),
dans lequel chacun du troisième côté (11b3) et du quatrième côté (11b4) est plus long que chacun du premier côté (11b1) et du deuxième côté (11b2),
dans lequel l'élément de maintien (4) maintient la paire de premiers éléments de protection (12), et
dans lequel l'élément de maintien (4) comprend une paire de parties de maintien (4a) qui maintiennent les premières parties (12d) de la paire de premiers éléments de protection (12) aux parties d'extrémité du troisième côté (11b3), et une partie de couplage qui s'étend le long du troisième côté (11b3) pour coupler la paire de parties de maintien (4a), la partie de couplage étant maintenue à l'écart du contact avec le panneau de cellules solaires.

2. Toit incliné (2) selon la revendication 1, dans lequel le module de cellules solaires (10) comprend en outre un deuxième élément de protection (13) qui maintient le quatrième côté (11b4).

3. Toit incliné (2) selon la revendication 1 ou 2, dans lequel la partie de couplage présente, le long du troisième côté (11b3) du panneau de cellules solaires (11), une première surface intérieure, une deuxième surface intérieure et une troisième surface intérieure qui sont opposées à la première surface (liai), à la deuxième surface (11a2) et à la troisième surface (11a3), respectivement.

4. Toit incliné (2) selon l'une quelconque des revendications 1 à 3, dans lequel
l'élément de maintien (4) comprend une première partie de paroi (4a1) opposée à la première surface (liai), une deuxième partie de paroi (4a2) opposée à la deuxième surface (11a2), et une troisième partie de paroi (4a3) située entre la première partie de paroi (4a1) et la deuxième partie de paroi (4a2) et opposée à la troisième surface (11a3), et
une partie de la première partie de paroi (4a1) comprend une partie découpée (4c) de laquelle une partie de la première surface (liai) située près du troisième côté (11b3) est exposée, la partie découpée (4c) s'étendant à la troisième partie de paroi (4a3).

5. Toit incliné (2) selon l'une quelconque des revendications 1 à 4, dans lequel l'élément de maintien (4) comprend une partie de rainure (4d) dans une surface intérieure de celui-ci opposée à la deuxième surface (11a2) du panneau de cellules solaires (11).

6. Toit incliné (2) selon la revendication 5, dans lequel la partie de rainure (4d) comprend une partie de trou (4d2) pénétrant à travers une surface inférieure de la partie de rainure (4d).

7. Toit incliné (2) selon l'une quelconque des revendications 1 à 6, comprenant en outre un élément conducteur (5) qui est électriquement connecté à l'élément de maintien (4) et aux premières parties (12d).
